(19) Europäisches Patentamt
European Patent Office
Office européen des brevets

(11) EP 4 418 013 A1

(12) EUROPEAN PATENT APPLICATION
published in accordance with Art. 153(4) EPC

(43) Date of publication:
21.08.2024 Bulletin 2024/34

(51) International Patent Classification (IPC):
G01S 13/95 (2006.01)    G01W 1/00 (2006.01)

(21) Application number: 22880604.8

(52) Cooperative Patent Classification (CPC):
G01S 13/95; G01W 1/00; Y02A 90/10

(22) Date of filing: 12.07.2022

(86) International application number:
PCT/JP2022/027376

(87) International publication number:
WO 2023/062899 (20.04.2023 Gazette 2023/16)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 14.10.2021 JP 2021168886

(71) Applicants:
• Kabushiki Kaisha Toshiba
Tokyo 105-0023 (JP)

• Toshiba Infrastructure Systems & Solutions Corporation
Kawasaki-shi, Kanagawa 212-0013 (JP)

(72) Inventors:
• SUEZAWA, Taku
Kawasaki-shi, Kanagawa 212-0013 (JP)
• MIZUTANI, Fumihiko
Kawasaki-shi, Kanagawa 212-0013 (JP)

(74) Representative: Hoffmann Eitle
Patent- und Rechtsanwälte PartmbB
Arabellastraße 30
81925 München (DE)

(54) CLUTTER DETECTING DEVICE, METEOROLOGICAL OBSERVATION SYSTEM, CLUTTER DETECTING METHOD, AND PROGRAM

(57) A clutter detection apparatus includes: a first discrimination unit that receives observation data obtained by observing a weather condition, and discriminates a plurality of pieces of fine weather data, which are observation data in fine weather, based on the observation data; and a second discrimination unit that calculates a statistical value of a clutter for each range bin of a radar coverage area based on the plurality of pieces of fine weather data, and discriminates a wind turbine clutter that is an echo caused by a wind turbine based on a variance of the statistical value.

FIG. 2

## Description

FIELD

Embodiments described herein relate generally to a clutter detection apparatus, a weather observation system, a clutter detection method, and a program.

BACKGROUND

In recent years, with increasing demand for renewable energy, wind power generators (also referred to as wind turbine) have been installed in various places. Since weather radars widen the observation range and wind turbines increase the amount of power generation, each of them is often installed at a place where visibility and ventilation are good. That is, the weather radar and the wind turbine may be installed in an adjacent place.

In a conventional weather radar, in order to remove a non-precipitation echo generated by a ground building or the like, a process of removing an echo in which a Doppler velocity becomes zero, a so-called moving target indicator (MTI) process, is used.

Since the wind turbine has a speed component due to rotation, an echo (referred to as a wind turbine clutter) from the wind turbine cannot be removed by the conventional MTI process. Non Patent Literature 1 has been proposed as a technique for removing a wind turbine clutter. For application of this method, position information of the wind turbine clutter is required.

Conventionally, in order to detect the position information of the wind turbine clutter, it is necessary to manually register the position information using a map or the like. This work is labor intensive and time consuming. In addition, when a wind turbine is newly constructed, the wind turbine is not reflected on the map, and position information of the wind turbine clutter cannot be registered. In this case, it becomes difficult to discriminate the wind turbine clutter, and the weather condition cannot be observed more accurately.

PATENT LITERATURE

NON PATENT LITERATURE

Non Patent Literature 1: Kong, F., Y. Zhang, R. Palmer, "Wind Turbine Clutter Mitigation for Weather Radar by Adaptive Spectrum Processing," 2012 IEEE Radar Conference, Atlanta, GA, 2012.

SUMMARY

TECHNICAL PROBLEM

An object of the present invention is to provide a clutter detection apparatus, a weather observation system, a clutter detection method, and a program capable of automatically detecting a position of a wind turbine clutter.

SOLUTION TO PROBLEM

According to one embodiment, there is provided a clutter detection apparatus comprising:

a first discrimination unit that receives observation data obtained by observing a weather condition, and discriminates a plurality of pieces of fine weather data, which are observation data in fine weather, based on the observation data; and
a second discrimination unit that calculates a statistical value of a clutter for each range bin of a radar coverage area based on the plurality of pieces of fine weather data, and discriminates a wind turbine clutter that is an echo caused by a wind turbine based on a variance of the statistical value.

BRIEF DESCRIPTION OF THE DRAWINGS

FIG. 1 is a block diagram of a weather observation system according to a first embodiment.
FIG. 2 is a block diagram of the clutter detection apparatus illustrated in FIG. 1.
FIG. 3 is a block diagram illustrating a hardware configuration example of the weather analysis apparatus and the clutter detection apparatus illustrated in FIG. 1.
FIG. 4 is a flowchart for explaining an overall flow of a wind turbine clutter detection operation by the clutter detection apparatus.
FIG. 5 is a flowchart for explaining a fine weather data discrimination operation by a fine weather data discrimination unit.
FIG. 6 is a graph illustrating an example of a relationship between the number of echoes and an occurrence frequency in the fine weather data discrimination operation.
FIG. 7 is a schematic diagram for explaining fine weather observation data.
FIG. 8 is a schematic diagram for explaining precipitation observation data.
FIG. 9 is a flowchart for explaining a wind turbine clutter discrimination operation by a wind turbine clutter discrimination unit.
FIG. 10 is a diagram for explaining sectors and range bins in a radar coverage area.
FIG. 11 is a graph for explaining a statistical value of a clutter having a speed component.
FIG. 12 is a graph for explaining a statistical value of a clutter having no speed component.
FIG. 13 is a diagram for explaining an example of a wind turbine clutter map.
FIG. 14 is a graph for explaining a statistical value of a clutter having a speed component according to a second embodiment.

FIG. 15 is a graph for explaining a statistical value of a clutter having no speed component according to the second embodiment.

FIG. 16 is a graph for explaining a statistical value of a clutter having a speed component according to a third embodiment.

FIG. 17 is a graph for explaining a statistical value of a clutter having no speed component according to the third embodiment.

DETAILED DESCRIPTION

Hereinafter, embodiments will be described with reference to the drawings. Some embodiments described below illustrate an apparatus and a method for embodying the technical idea of the present invention, and the technical idea of the present invention is not specified by the shape, structure, arrangement, and the like of the components. Each functional block can be realized as either hardware or software or a combination of both. It is not essential that each functional block is distinguished as in the following example. For example, some functions may be executed by a functional block different from the illustrated functional block. Further, the exemplary functional blocks may be divided into finer functional sub-blocks. In the following description, elements having the same functions and configurations are denoted by the same reference numerals, and redundant description will be omitted.

<1> First Embodiment

<1-1> Configuration of weather observation system 1

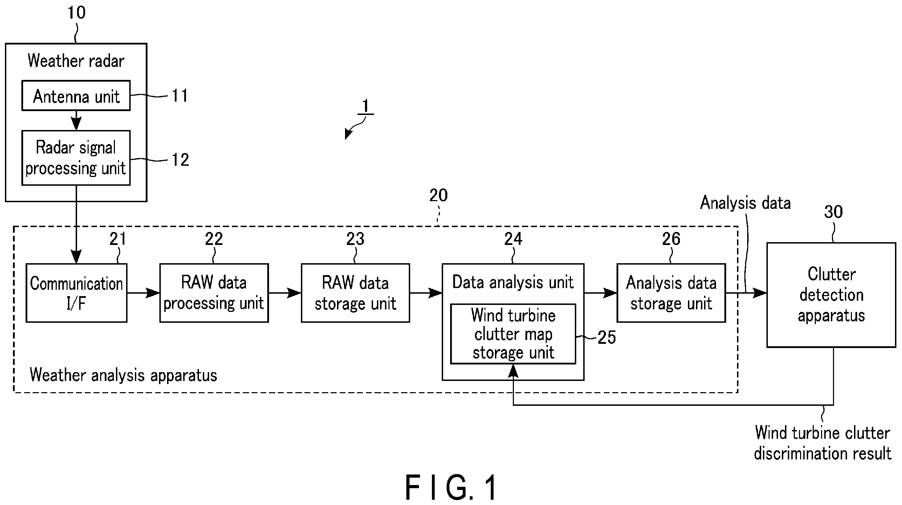

FIG. 1 is a block diagram of a weather observation system 1 according to a first embodiment. The weather observation system 1 includes a weather radar 10, a weather analysis apparatus 20, and a clutter detection apparatus 30.

The weather radar 10 is a radar apparatus installed on the ground. The weather radar 10 observes a weather condition (rain, snow, rain cloud, rain area, wind direction, wind speed, and the like) in a predetermined range (radar coverage area) centered on the installation location, and generates weather observation data regarding the weather condition. The weather radar 10 observes precipitation particles by transmitting and receiving radio waves. In addition, the weather radar 10 scans the precipitation particles every predetermined time.

The weather radar 10 includes an antenna unit 11 and a radar signal processing unit 12. The antenna unit 11 transmits a radio wave and receives a reflected wave (echo) thereof. The radar signal processing unit 12 performs general signal processing such as modulation, amplification of signal intensity, and frequency conversion on the echo received by the antenna unit 11.

The weather radar 10 includes, for example, a phased array weather radar (PAWR). The phased array weather radar electronically varies a directional angle by controlling phases of signals input to an array of antenna elements constituting a phased array antenna. The weather radar 10 transmits and receives radio waves while changing the directional angle of the antenna. For example, the weather radar 10 varies the directional angle in an elevation direction (vertical direction) within a certain angular range (for example, 90 degrees) by electrical phase control. In addition, the weather radar 10 mechanically varies the directional angle in an azimuth direction (horizontal direction) by the drive mechanism.

Furthermore, the weather radar 10 may be a multiparameter phased array weather radar (MP-PAWR). The MP-PAWR is also referred to as dual polarization phased array weather radar (DP-PAWR). The MP-PAWR is a system for simultaneously transmitting a horizontally polarized pulse signal and a vertically polarized pulse signal by a fan beam. By using the MP-PAWR, the three-dimensional structure of the rain cloud can be observed with higher accuracy, and the precipitation intensity can be estimated with higher accuracy. Note that the weather radar 10 may be a parabolic weather radar.

The weather analysis apparatus 20 analyzes weather observation data obtained by the weather radar 10. The weather analysis apparatus 20 includes a communication interface (communication I/F) 21, a RAW data processing unit 22, a RAW data storage unit 23, a data analysis unit 24, and an analysis data storage unit 26.

The communication interface 21 is an interface for communicating with the weather radar 10 and the like. The communication interface 21 repeatedly receives weather observation data from the weather radar 10. The weather observation data received by the communication interface 21 is transmitted to the RAW data processing unit 22.

The RAW data processing unit 22 generates RAW data including three-dimensional data by using the weather observation data transmitted from the communication interface 21. The three-dimensional data includes a plurality of pieces of two-dimensional polar coordinate data. The polar coordinate data includes data in the elevation angle direction. The RAW data generated by the RAW data processing unit 22 is stored in the RAW data storage unit 23.

The data analysis unit 24 sequentially acquires RAW data for one cycle from the RAW data storage unit 23. The data analysis unit 24 analyzes the weather condition on a mesh-by-mesh basis using the RAW data, and quantifies the weather condition. The data analysis unit 24 analyzes, for example, precipitation intensity, a type of precipitation particle (including rain, snow, and hail), movement of a rain cloud, a wind direction, a wind speed, and the like. The analysis data generated by the data analysis unit 24 is stored in the analysis data storage unit 26. In addition, the analysis data generated by the data analysis unit 24 is appropriately transmitted to the outside.

In addition, the data analysis unit 24 includes a wind turbine clutter map storage unit 25 that stores a wind turbine clutter map. The clutter is an echo caused by an object other than the target. The wind turbine clutter map includes position information of a clutter (referred to as wind turbine clutter) by the wind turbine installed on the ground. The data analysis unit 24 analyzes the weather condition by removing clutter reflected by the wind turbine. As a result, the weather condition can be analyzed more accurately.

<1-1-1> Clutter detection apparatus 30

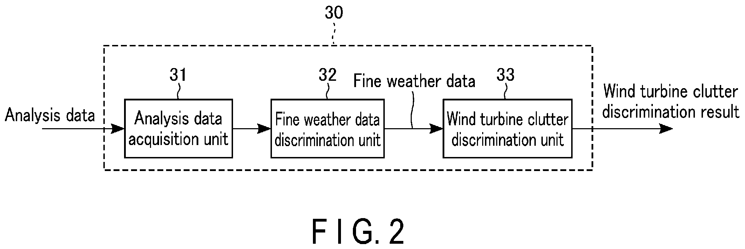

FIG. 2 is a block diagram of the clutter detection apparatus 30 illustrated in FIG. 1. The clutter detection apparatus 30 includes an analysis data acquisition unit 31, a fine weather data discrimination unit 32, and a wind turbine clutter discrimination unit 33.

The analysis data acquisition unit 31 acquires observation data from the weather analysis apparatus 20. Specifically, the analysis data acquisition unit 31 sequentially acquires observation data for a predetermined period stored in the analysis data storage unit 26.

The fine weather data discrimination unit 32 discriminates observation data in fine weather based on the observation data acquired by the analysis data acquisition unit 31. That is, the fine weather data discrimination unit 32 extracts observation data in fine weather from the observation data acquired by the analysis data acquisition unit 31.

The wind turbine clutter discrimination unit 33 detects and discriminates the wind turbine clutter position based on the observation data in fine weather discriminated by the fine weather data discrimination unit 32. Then, the wind turbine clutter discrimination unit 33 generates a discrimination result including the wind turbine clutter position.

<1-1-2> Hardware configuration

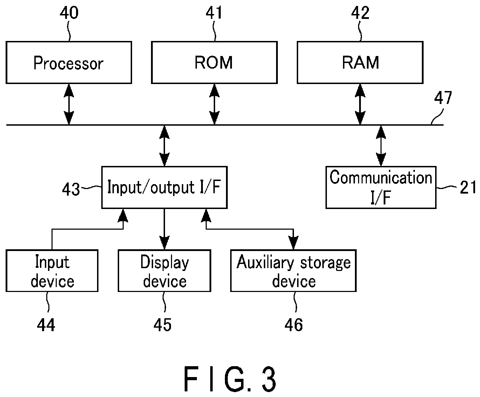

FIG. 3 is a block diagram illustrating a hardware configuration example of the weather analysis apparatus 20 and the clutter detection apparatus 30 illustrated in FIG. 1.

The weather analysis apparatus 20 and the clutter detection apparatus 30 include a processor 40, a read only memory (ROM) 41, a random access memory (RAM) 42, an input/output interface (input/output I/F) 43, an input device 44, a display device 45, an auxiliary storage device 46, a communication interface (communication I/F) 21, and the like. The processor 40, the ROM 41, the RAM 42, the input/output interface 43, and the communication interface 21 are connected via a bus 47.

The processor 40 is a central processing unit (CPU) that integrally controls operations of the weather analysis apparatus 20 and the clutter detection apparatus 30. The processor 40 executes various types of arithmetic processing using programs and data stored in the ROM 41, the RAM 42, and the auxiliary storage device 46.

A specific program for realizing the functions of the present embodiment is stored in the ROM 41 and/or the auxiliary storage device 46. The function of the present embodiment is realized by the processor 40 executing the specific program stored in the ROM 41 and/or the auxiliary storage device 46.

The ROM 41 is a read-only nonvolatile storage device that stores a basic program, an environment file, and the like for causing a computer to function. The RAM 42 is a volatile storage device that stores a program executed by the processor 40 and data necessary for executing the program, and is capable of high-speed reading and writing.

The input/output interface 43 is a device that mediates connection between various types of hardware and the bus 47. Hardware such as the input device 44, the display device 45, and the auxiliary storage device 46 is connected to the input/output interface 43.

The input device 44 is a device that processes an input from a user, and is, for example, a keyboard, a mouse, or the like. The display device 45 is a device that displays a calculation result, an image, and the like to the user, and is, for example, a liquid crystal display device, an organic EL display device, or the like. The auxiliary storage device 46 is a large-capacity nonvolatile storage device that stores programs and data, and is, for example, a hard disk drive (HDD) or a solid state drive (SSD).

The communication interface 21 transmits and receives data to and from an external apparatus in a wired or wireless manner.

<1-2> Operation

Next, an operation of the weather observation system 1 configured as described above will be described.

The data analysis unit 24 continuously analyzes the weather condition for each cycle. One cycle is a period in which a radar coverage area around the weather radar 10 is observed once (an azimuth angle of 360 degrees). The observation data of one cycle is three-dimensional data. The analysis data storage unit 26 stores the analysis data as the analysis result by the data analysis unit 24 for a long period of time such as monthly or yearly.

The clutter detection apparatus 30 performs a wind turbine clutter detection operation using the analysis data stored in the analysis data storage unit 26.

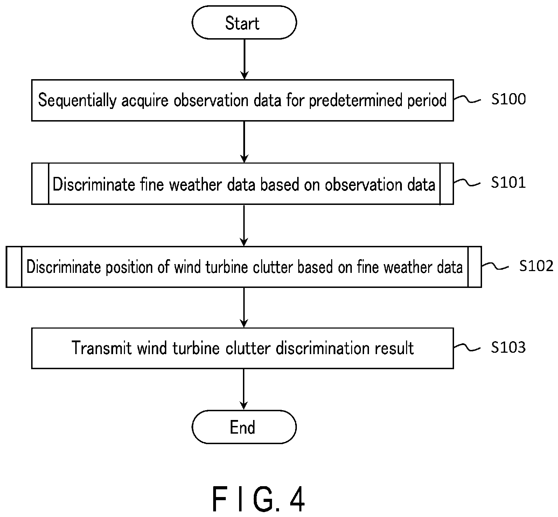

FIG. 4 is a flowchart for explaining the overall flow of the wind turbine clutter detection operation by the clutter detection apparatus 30.

The analysis data acquisition unit 31 sequentially acquires analysis data (also referred to as observation data) for a predetermined period stored in the analysis data storage unit 26 (step S100). The predetermined period of step S100 is in units of weeks, months, or years, and is, for example, 1 week, 1 month, 6 months, or 1 year. The predetermined period can be set as appropriate.

Subsequently, the fine weather data discrimination unit 32 discriminates observation data (also referred to as fine weather data) in fine weather based on the observation data acquired by the analysis data acquisition unit 31 (step S101). The fine weather data discriminated by the fine weather data discrimination unit 32 is sequentially sent to the wind turbine clutter discrimination unit 33.

Subsequently, the wind turbine clutter discrimination unit 33 discriminates the wind turbine clutter position based on the plurality of pieces of fine weather data (step S102). The wind turbine clutter position is the same as the position of the wind turbine.

Subsequently, the wind turbine clutter discrimination unit 33 transmits the wind turbine clutter discrimination result including the position information of the wind turbine clutter to the data analysis unit 24 (step S103). The data analysis unit 24 registers the wind turbine clutter position in the wind turbine clutter map using the received wind turbine clutter discrimination result.

<1-2-1> Fine weather data discrimination operation

In the precipitation echo observed during rainfall, the Doppler velocity temporally fluctuates. This feature is similar to that of the wind turbine clutter. When the wind turbine clutter detection is performed using observation data during rainfall, there is a possibility that a point where a precipitation echo is observed is erroneously determined as a wind turbine clutter. In the present embodiment, the observation data used for wind turbine clutter detection is observation data in fine weather (no precipitation echo). The fine weather data discrimination unit 32 plays a role of delivering the observation data discriminated to be the fine weather among the observation data acquired from the analysis data storage unit 26 to the wind turbine clutter discrimination unit 33 in the subsequent stage.

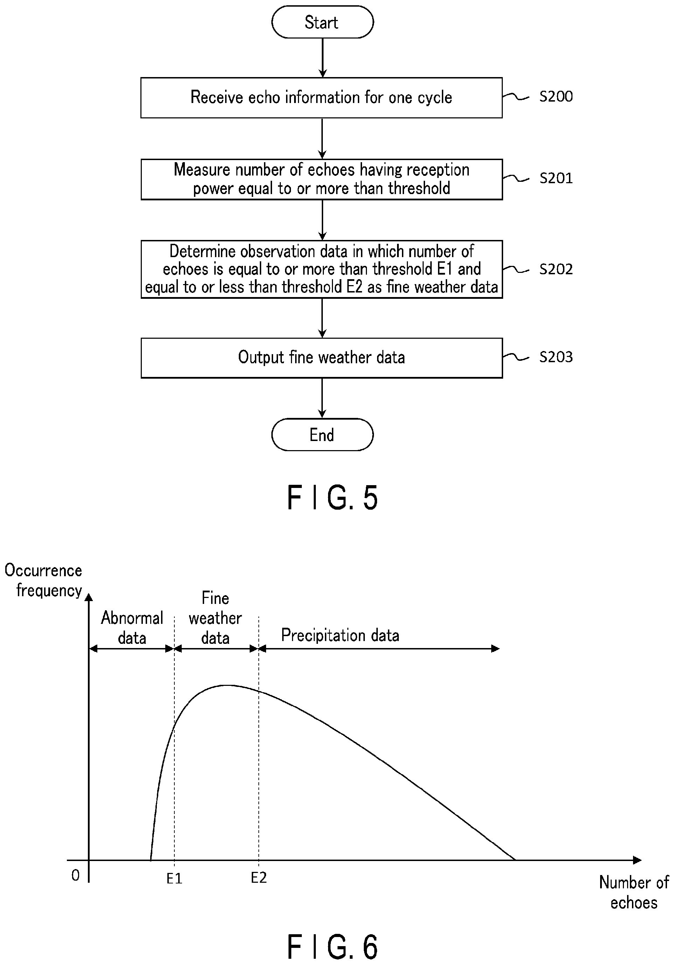

FIG. 5 is a flowchart for explaining a fine weather data discrimination operation by the fine weather data discrimination unit 32. The process of FIG. 5 corresponds to the process of step S101 of FIG. 4.

The observation data acquired by the analysis data acquisition unit 31 includes reception power data for each of the plurality of echoes.

The fine weather data discrimination unit 32 receives, for example, a plurality of pieces of echo information for one cycle corresponding to the radar coverage area from the analysis data acquisition unit 31 (step S200). The echo information includes reception power data of the echo.

Subsequently, the fine weather data discrimination unit 32 measures the number of echoes having reception power equal to or greater than a threshold T1 based on echo information for one cycle (step S201).

The threshold T1 is set based on the statistical value of the reception power of the wind turbine clutter, and is set to be lower than the reception power of the wind turbine clutter. In addition, the threshold T1 is set to be lower than the reception power of an echo caused by a rain cloud. That is, the echo having the reception power of the threshold T1 or more includes an echo by the wind turbine clutter and an echo by the rain cloud.

Subsequently, the fine weather data discrimination unit 32 discriminates observation data in which the number of echoes is equal to or larger than the threshold E1 and equal to or smaller than the threshold E2 as fine weather observation data (referred to as fine weather data) (step S202).

FIG. 6 is a graph illustrating an example of a relationship between the number of echoes and an occurrence frequency in the fine weather data discrimination operation. The curve in FIG. 6 is obtained by connecting vertices of a plurality of histograms. For the sake of simplicity, illustration of a plurality of histograms is omitted. The same applies to other drawings relating to the frequency distribution.

The fine weather data discrimination unit 32 determines observation data whose number of echoes is less than the threshold E1 as abnormal data. The threshold E1 is set to a value with which data that has an extremely small number of echoes and is not used for weather analysis can be determined.

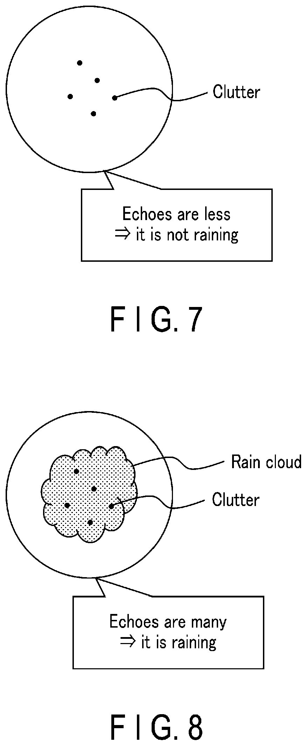

FIG. 7 is a schematic diagram illustrating fine weather observation data. The outer periphery of FIG. 7 illustrates a radar coverage area of the weather radar 10. On a fine day, there is no echo due to a rain cloud or the like, so that the number of echoes is relatively small. On a fine day, a clutter having reception power equal to or greater than the threshold T1 is observed. In the case of FIG. 7, it is determined that it is fine, that is, it is not raining. The fine weather data discrimination unit 32 determines observation data in which the number of echoes is equal to or larger than the threshold E1 and equal to or smaller than the threshold E2 as fine weather data.

FIG. 8 is a schematic diagram for explaining precipitation observation data. A dot-hatched region illustrated in FIG. 8 represents a rain cloud. During precipitation, there are relatively many echoes due to rain clouds and the like. In the case of FIG. 8, it is determined that it is raining.

The fine weather data discrimination unit 32 determines observation data in which the number of echoes is larger than the threshold E2 as precipitation observation data (also referred to as rainfall data). The threshold E2 is set to a value with which it can be determined that there is a rain cloud.

Subsequently, the fine weather data discrimination unit 32 outputs the fine weather data determined in step S201 (step S203). Thereafter, the fine weather data discrimination unit 32 repeats the above operation over a plurality of cycles.

Note that the processing unit of the fine weather data discrimination unit 32 is not limited to one cycle corresponding to the radar coverage area, and may be a partial period obtained by dividing one cycle.

<1-2-2> Wind turbine clutter discrimination operation

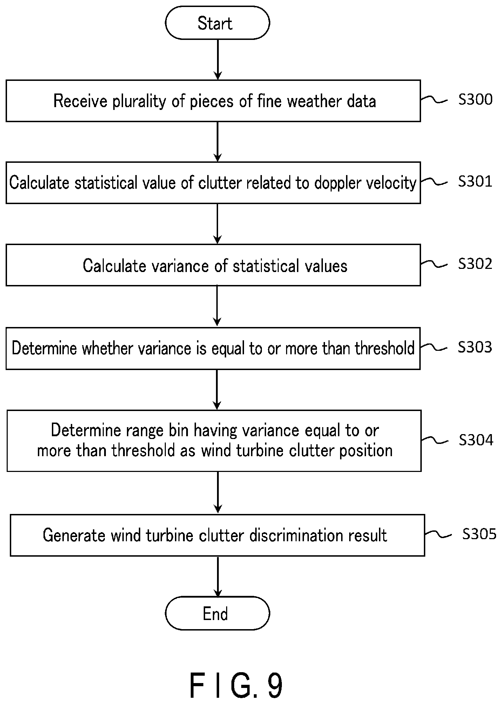

FIG. 9 is a flowchart for explaining a wind turbine clutter discrimination operation by the wind turbine clutter discrimination unit 33. The process of FIG. 9 corresponds to the process of step S102 of FIG. 4.

The wind turbine clutter discrimination unit 33 receives a plurality of pieces of fine weather data from the fine weather data discrimination unit 32 (step S300). The wind turbine clutter discrimination unit 33 collects fine weather data at a plurality of times over a predetermined period for each range bin to be observed.

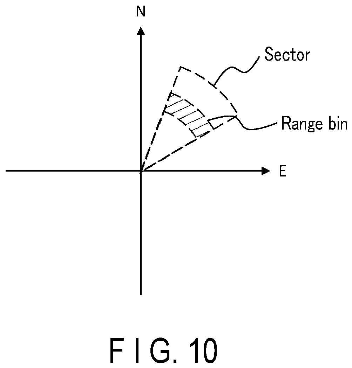

FIG. 10 is a diagram for explaining sectors and range bins in the radar coverage area. FIG. 10 illustrates a radar coverage area, where N is north and E is east. The weather analysis apparatus 20 processes a reception signal in a radar coverage area of 360 degrees centered on the weather radar 10. The sector is a processing unit in the azimuth angle direction, and is a processing unit obtained by dividing a radar coverage area into a plurality of sections in the azimuth angle direction. The range bin is a unit of data obtained by sampling a reception signal every predetermined time (that is, the predetermined distance) in a range direction (distance direction), and is a unit cell obtained by dividing a radar coverage area by an interval corresponding to a sampling period of the reception signal in the distance direction. The sizes of the sector and the range bin can be arbitrarily set.

Subsequently, the wind turbine clutter discrimination unit 33 calculates a statistical value of a clutter related to the Doppler velocity for each range bin using a plurality of pieces of fine weather data (including clutter information) corresponding to a plurality of cycles (step S301). The Doppler velocity is a parameter representing the moving speed of the observation target, and is calculated based on the phase of the signal received by the weather radar 10. The observation data received by the wind turbine clutter discrimination unit 33 includes Doppler velocity information of an echo. When the Doppler velocity information is not included in the observation data received by the wind turbine clutter discrimination unit 33, the wind turbine clutter discrimination unit 33 calculates the Doppler velocity of the echo.

Subsequently, the wind turbine clutter discrimination unit 33 calculates the variance of the statistical values calculated in step S301 (step S302). The variance is a square of a standard deviation, and is an average of squares of differences between an average value and individual data in numerical data of a certain group. In order to simplify the processing, the variance may be calculated by sampling a part of the target data.

Subsequently, the wind turbine clutter discrimination unit 33 determines whether the variance calculated in step S302 is equal to or greater than the threshold T2 (step S303).

Subsequently, the wind turbine clutter discrimination unit 33 determines a range bin having a variance of the threshold T2 or more as a position of the wind turbine clutter (referred to as a wind turbine clutter position) (step S304). In addition, the wind turbine clutter discrimination unit 33 determines a range bin having a variance smaller than the threshold T2 as a position of a clutter other than the wind turbine. The position referred to herein is an echo occurrence position.

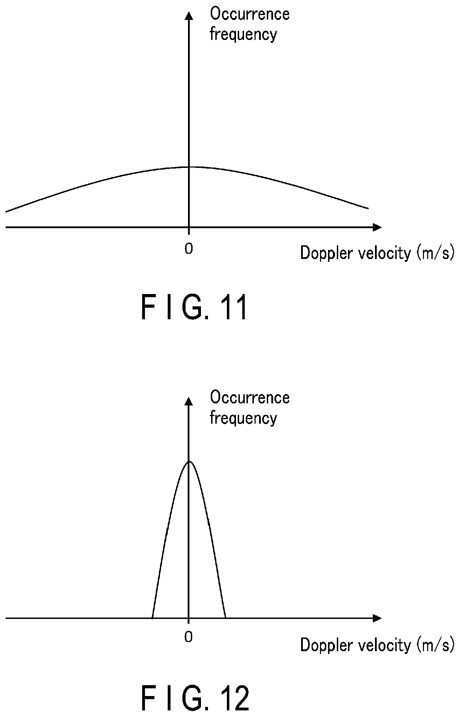

FIG. 11 is a graph for explaining a statistical value of a clutter having a speed component. In FIG. 11, the horizontal axis represents the Doppler velocity of the clutter, and the vertical axis represents the occurrence frequency. The speed component is a target moving speed.

FIG. 11 corresponds to a statistical value of the wind turbine clutter. The wind turbine clutter has a Doppler velocity due to the rotation of the wind turbine. The wind turbine clutter has a relatively large variance of the Doppler velocity.

FIG. 12 is a graph for explaining a statistical value of a clutter having no speed component. FIG. 12 corresponds to statistical values of a clutter reflected by a building or the like. The clutter having no speed component has a peak of an occurrence frequency near 0 (m/s) of the Doppler velocity, and the variance of the Doppler velocity is relatively small.

In the present embodiment, a threshold T2 that can discriminate the variance between FIGS. 11 and 12 is set. Thus, the wind turbine clutter can be discriminated by comparing the variance with the threshold T2.

Subsequently, the wind turbine clutter discrimination unit 33 generates a wind turbine clutter discrimination result (step S305). The wind turbine clutter discrimination result includes wind turbine clutter position information and position information of a clutter other than the wind turbine.

Thereafter, the wind turbine clutter discrimination unit 33 transmits the wind turbine clutter discrimination result to the weather analysis apparatus 20.

The data analysis unit 24 of the weather analysis apparatus 20 updates the wind turbine clutter map stored in the wind turbine clutter map storage unit 25 based on the wind turbine clutter discrimination result transmitted from the wind turbine clutter discrimination unit 33.

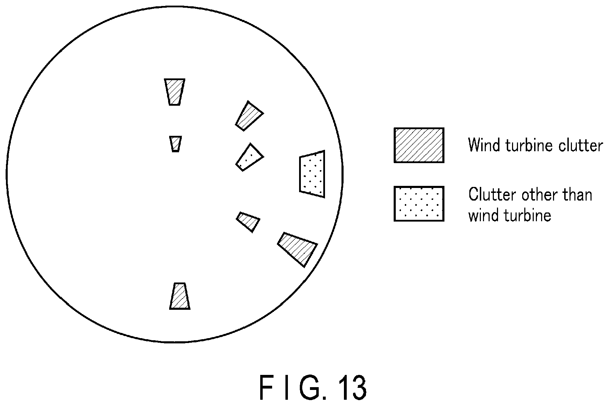

FIG. 13 is a diagram for explaining an example of the wind turbine clutter map. The outer periphery of FIG. 13 illustrates a radar coverage area of the weather radar 10. In the wind turbine clutter map, a wind turbine clutter position (wind turbine clutter in the drawing) and a position of a building or the like other than the wind turbine (clutter other than the wind turbine in the drawing) are registered.

The data analysis unit 24 removes the wind turbine clutter using the wind turbine clutter map. Then, the data analysis unit 24 analyzes the weather condition using the observation data from which the wind turbine clutter has been removed. As a result, the weather condition can be analyzed more accurately.

<1-3> Effects of First Embodiment

In the first embodiment, the fine weather data discrimination unit 32 discriminates observation data in fine weather from a plurality of pieces of observation data related to the weather condition. The wind turbine clutter discrimination unit 33 calculates a statistical value of a clutter related to the Doppler velocity using the observation data in fine weather. The wind turbine clutter discrimination unit 33 discriminates the wind turbine clutter which is an echo by the wind turbine based on the variance of the statistical values.

Therefore, according to the first embodiment, the wind turbine clutter position in the radar coverage area can be automatically detected. As a result, the work and labor for specifying the wind turbine clutter position can be reduced.

In addition, the wind turbine clutter position can be detected using observation data of the weather radar 10 that is constantly observed. This makes it possible to specify the position of the new wind turbine without waiting for the map to be updated. In addition, the position of the new wind turbine can be registered in the wind turbine clutter map without using map information.

In addition, when the weather condition is analyzed, the wind turbine clutter can be removed using more accurate wind turbine clutter position information. This makes it possible to more accurately analyze the weather condition.

<2> Second Embodiment

The second embodiment is a modification of the wind turbine clutter discrimination operation. In the second embodiment, the variance is calculated using the reception power of the clutter.

The wind turbine clutter discrimination unit 33 calculates a statistical value of a clutter related to the reception power for each range bin by using a plurality of pieces of fine weather data corresponding to a plurality of cycles. The observation data received by the wind turbine clutter discrimination unit 33 includes reception power information of an echo.

Subsequently, the wind turbine clutter discrimination unit 33 determines a range bin having a variance of the threshold T2 or more as a wind turbine clutter position.

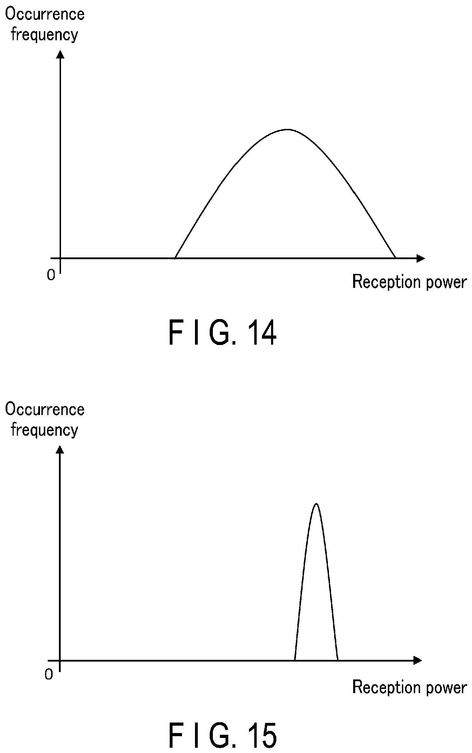

FIG. 14 is a graph illustrating a statistical value of a clutter having a speed component. In FIG. 14, the horizontal axis represents the reception power of the clutter, and the vertical axis represents the occurrence frequency.

FIG. 14 corresponds to a statistical value of the wind turbine clutter. The reception power of the wind turbine clutter fluctuates due to the rotation of the wind turbine. That is, in the wind turbine clutter, the variance of the reception power is relatively large.

FIG. 15 is a graph illustrating a statistical value of a clutter having no speed component. FIG. 15 corresponds to a statistical value of a clutter reflected by a building or the like. A clutter having no speed component has a relatively small variance of reception power.

In the present embodiment, a threshold T2 that can determine the variance between FIGS. 14 and 15 is set. Thus, the wind turbine clutter can be discriminated by comparing the variance with the threshold T2.

Other operations are the same as those of the first embodiment. Also in the second embodiment, the same effects as those of the first embodiment can be obtained.

The second embodiment may be used in combination with the first embodiment.

<3> Third Embodiment

The third embodiment is another modification of the wind turbine clutter discrimination operation. In the third embodiment, the variance is calculated using the radar reflection factor of a clutter.

The wind turbine clutter discrimination unit 33 calculates a statistical value of a clutter related to the radar reflection factor for each range bin by using a plurality of pieces of fine weather data corresponding to a plurality of cycles. The observation data received by the wind turbine clutter discrimination unit 33 includes radar reflection factor information of an echo. When the observation data does not include the radar reflection factor information, the wind turbine clutter discrimination unit 33 calculates the radar reflection factor of the echo.

The radar reflection factor is a parameter that varies depending on the grain diameter of particles that reflect radio waves. Assuming the rainfall intensity is R (mm/h), the radar reflection factor Z ($mm^6/m^3$) is expressed by the following equation.

$$Z = a \times R^b$$

a and b are constants.

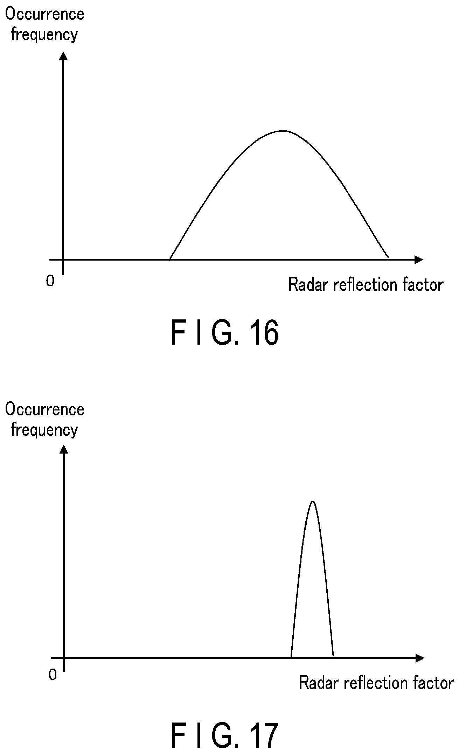

Subsequently, the wind turbine clutter discrimination unit 33 determines a range bin having a variance of the threshold T2 or more as a wind turbine clutter position. FIG. 16 is a graph for explaining a statistical value of a clutter having a speed component. In FIG. 16, the horizontal axis represents the radar reflection factor of the clutter, and the vertical axis represents the occurrence frequency.

FIG. 16 corresponds to a statistical value of the wind turbine clutter. In the wind turbine clutter, a radar reflection factor fluctuates due to rotation of the wind turbine. That is, in the wind turbine clutter, the variance of the radar reflection factor is relatively large.

FIG. 17 is a graph illustrating a statistical value of a clutter having no speed component. FIG. 17 corresponds to a statistical value of a clutter reflected by a building or the like. The clutter having no speed component has a relatively small variance of the radar reflection factor.

In the present embodiment, a threshold T2 that can discriminate the variance between FIGS. 16 and 17 is set. Thus, the wind turbine clutter can be discriminated by comparing the variance with the threshold T2.

Other operations are the same as those of the first embodiment. Also in the third embodiment, the same effects as those of the first embodiment can be obtained.

The third embodiment may be used in combination with the first embodiment.

In the first to third embodiments, the Doppler velocity, the reception intensity, and the radar reflection factor are used as the types of observation data for discriminating the wind turbine clutter, but the present embodiment is not limited thereto. In the present embodiment, the wind turbine clutter may be discriminated using other observation data capable of determining the speed component of the clutter.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

**Claims**

1. A clutter detection apparatus comprising:

   a first discrimination unit that receives observation data obtained by observing a weather condition, and discriminates a plurality of pieces of fine weather data, which are observation data in fine weather, based on the observation data; and
   a second discrimination unit that calculates a statistical value of a clutter for each range bin of a radar coverage area based on the plurality of pieces of fine weather data, and discriminates a wind turbine clutter that is an echo caused by a wind turbine based on a variance of the statistical value.

2. The clutter detection apparatus according to claim 1, wherein
   the statistical value is a statistical value of a clutter related to a Doppler velocity, a statistical value of a clutter related to reception intensity, or a statistical value of a clutter related to a radar reflection factor.

3. The clutter detection apparatus according to claim 1, wherein
   the first discrimination unit is configured to:

   measure a number of echoes whose reception power is a first threshold or more for each cycle of a weather radar; and
   determine observation data in which the number of measured echoes is equal to or larger than a second threshold and equal to or smaller than a third threshold as the fine weather data.

4. The clutter detection apparatus according to claim 1, wherein
   the second discrimination unit determines a corresponding range bin as a wind turbine clutter position when the variance is a fourth threshold or more.

5. The clutter detection apparatus according to claim 4, wherein
   the second discrimination unit generates a wind turbine clutter discrimination result including wind turbine clutter position information.

6. A weather observation system comprising:

   the clutter detection apparatus according to claim 5; and
   an analysis unit that analyzes a weather condition by removing wind turbine clutter using a wind turbine clutter map in which a wind turbine clutter position is registered.

7. The weather observation system according to claim 6, wherein
   the analysis unit updates the wind turbine clutter map using the wind turbine clutter discrimination result.

8. The weather observation system according to claim 7, further comprising:

   a storage unit that stores the wind turbine clutter map, wherein
   the analysis unit updates the wind turbine clutter map stored in the storage unit.

9. A clutter detection method comprising:

   receiving observation data obtained by observing a weather condition, and discriminating a plurality of pieces of fine weather data which are observation data in fine weather based on the observation data;
   calculating a statistical value of a clutter for each range bin of a radar coverage area based on the plurality of pieces of fine weather data; and discriminating a wind turbine clutter that is an echo by a wind turbine based on a variance of the statistical value.

10. A program causing a computer to execute:

receiving observation data obtained by observing a weather condition and discriminating a plurality of pieces of fine weather data, which are observation data in fine weather, based on the observation data;
calculating a statistical value of a clutter for each range bin of a radar coverage area based on the plurality of pieces of fine weather data; and discriminating a wind turbine clutter that is an echo by a wind turbine based on a variance of the statistical value.

F I G. 1

F I G. 2

40 41 42

| Processor | ROM | RAM |

47

Input/output I/F 43

Communication I/F 21

| Input device | Display device | Auxiliary storage device |

44 45 46

F I G. 3

```
                    ┌─────────────┐
                    │    Start    │
                    └──────┬──────┘
                           │
                           ▼
┌──────────────────────────────────────────────────────┐
│ Sequentially acquire observation data for predetermined period │  ╭╮  S100
└──────────────────────────────────────────────────────┘
                           │
                           ▼
┌──────────────────────────────────────────────────────┐
│  Discriminate fine weather data based on observation data  │  ╭╮  S101
└──────────────────────────────────────────────────────┘
                           │
                           ▼
┌──────────────────────────────────────────────────────┐
│ Discriminate position of wind turbine clutter based on fine weather data │  ╭╮  S102
└──────────────────────────────────────────────────────┘
                           │
                           ▼
┌──────────────────────────────────────────────────────┐
│     Transmit wind turbine clutter discrimination result     │  ╭╮  S103
└──────────────────────────────────────────────────────┘
                           │
                           ▼
                    ┌─────────────┐
                    │     End     │
                    └─────────────┘
```

# F I G. 4

Start

| Receive echo information for one cycle | S200 |

| Measure number of echoes having reception power equal to or more than threshold | S201 |

| Determine observation data in which number of echoes is equal to or more than threshold E1 and equal to or less than threshold E2 as fine weather data | S202 |

| Output fine weather data | S203 |

End

F I G. 5

Occurrence frequency

Abnormal data | Fine weather data | Precipitation data

0    E1    E2

Number of echoes

F I G. 6

Clutter

Echoes are less
⇒ it is not raining

# F I G. 7

Rain cloud

Clutter

Echoes are many
⇒ it is raining

# F I G. 8

```
                    ┌─────────────┐
                    │    Start    │
                    └──────┬──────┘
                           ↓
        ┌──────────────────────────────────────────┐
        │  Receive plurality of pieces of fine weather data  │──∿ S300
        └──────────────────┬───────────────────────┘
                           ↓
        ┌──────────────────────────────────────────┐
        │ Calculate statistical value of clutter related to doppler velocity │──∿ S301
        └──────────────────┬───────────────────────┘
                           ↓
        ┌──────────────────────────────────────────┐
        │      Calculate variance of statistical values      │──∿ S302
        └──────────────────┬───────────────────────┘
                           ↓
        ┌──────────────────────────────────────────┐
        │ Determine whether variance is equal to or more than threshold │──∿ S303
        └──────────────────┬───────────────────────┘
                           ↓
        ┌──────────────────────────────────────────┐
        │   Determine range bin having variance equal to or  │──∿ S304
        │  more than threshold as wind turbine clutter position │
        └──────────────────┬───────────────────────┘
                           ↓
        ┌──────────────────────────────────────────┐
        │  Generate wind turbine clutter discrimination result  │──∿ S305
        └──────────────────┬───────────────────────┘
                           ↓
                    ┌─────────────┐
                    │     End     │
                    └─────────────┘
```

# F I G. 9

F I G. 10

F I G. 11

F I G. 12

F I G. 13

Wind turbine clutter

Clutter other than
wind turbine

Occurrence
frequency

Reception power

F I G. 14

Occurrence
frequency

Reception power

F I G. 15

Occurrence
frequency

Radar reflection factor

0

# F I G. 16

Occurrence
frequency

Radar reflection factor

0

# F I G. 17

| INTERNATIONAL SEARCH REPORT | International application No. |
|---|---|
| | **PCT/JP2022/027376** |

**A. CLASSIFICATION OF SUBJECT MATTER**

*G01S 13/95*(2006.01)i; *G01W 1/00*(2006.01)i
FI: G01S13/95; G01W1/00 C

According to International Patent Classification (IPC) or to both national classification and IPC

**B. FIELDS SEARCHED**

Minimum documentation searched (classification system followed by classification symbols)

G01S7/00-7/51; G01S13/00-13/95; G01S17/00-17/95; G01W1/00-1/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore; JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | HOOD, Kenta et al. Automatic Detection of Wind Turbine Clutter for Weather Radars. Journal of Atmospheric and Oceanic Technology, November 2010, vol. 27, no. 11, pp. 1868-1880, DOI: 10.1175/2010JTECHA1437.1<br>columns 2-6 | 1-10 |
| A | KONG, Fanxing et al. Wind Turbine Clutter Mitigation for Weather Radar by Adaptive Spectrum Processing. 2012 IEEE Radar Conference, May 2012, pp. 0471-0474, DOI: 10.1109/RADAR.2012.6212187<br>columns 2, 3 | 1-10 |
| A | JIA, Qiongqiong et al. Recognition and Supression of Wind Farm Clutter via Dynamic Clutter Map. 2012 IEEE 11th International Conference on Signal Processing (ICSP2012 Proceedings), October 2012, pp. 1949-1952, DOI: 10.1109/ICoSP.2012.6491961<br>columns 2, 3 | 1-10 |
| A | US 2016/0069993 A1 (BAE SYSTEMS PLC) 10 March 2016 (2016-03-10)<br>entire text, all drawings | 1-10 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/027376**

**C.    DOCUMENTS CONSIDERED TO BE RELEVANT**

| Category* | Citation of document, with indication, where appropriate, of the relevant passages | Relevant to claim No. |
|---|---|---|
| A | CN 102721954 A (CIVIL AVIATION UNIVERSITY OF CHINA) 10 October 2012 (2012-10-10)<br>      entire text, all drawings | 1-10 |
| A | JP 2013-545084 A (TMD TECHNOLOGIES LTD.) 19 December 2013 (2013-12-19)<br>      entire text, all drawings | 1-10 |

Form PCT/ISA/210 (second sheet) (January 2015)

**INTERNATIONAL SEARCH REPORT**
Information on patent family members

International application No.

**PCT/JP2022/027376**

| Patent document cited in search report | | | Publication date (day/month/year) | Patent family member(s) | | | Publication date (day/month/year) |
|---|---|---|---|---|---|---|---|
| US | 2016/0069993 | A1 | 10 March 2016 | GB | 2513356 | A | |
| | | | | WO | 2014/174267 | A1 | |
| | | | | EP | 2796892 | A1 | |
| CN | 102721954 | A | 10 October 2012 | (Family: none) | | | |
| JP | 2013-545084 | A | 19 December 2013 | US | 2013/0285847 | A1 | |
| | | | | entire text, all drawings | | | |
| | | | | GB | 2484493 | A | |
| | | | | WO | 2012/049450 | A1 | |
| | | | | EP | 2628020 | B1 | |
| | | | | CA | 2814223 | A1 | |
| | | | | CN | 103210319 | A | |
| | | | | KR | 10-2013-0140693 | A | |

Form PCT/ISA/210 (patent family annex) (January 2015)

**EP 4 418 013 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KONG, F. ; Y. ZHANG ; R. PALMER.** Wind Turbine Clutter Mitigation for Weather Radar by Adaptive Spectrum Processing. *2012 IEEE Radar Conference, Atlanta, GA,* 2012